# EUROPEAN PATENT APPLICATION

(11) **EP 3 975 302 A1**
(43) Date of publication of application: **30.03.2022**
(21) Application number: 21176250.5
(22) Date of filing: 27.05.2021
(51) Int. Cl.: H01M 10/04, H01M 10/0587

(54) **CELL, BATTERY ASSEMBLY AND ELECTRONIC DEVICE**

(30) Priority: 23.09.2020 CN 202011012709
(71) Applicant: Beijing Xiaomi Mobile Software Co., Ltd., Beijing 100085 (CN)
(72) Inventor: Du, Sihong, Beijing, 100085 (CN); JIANG, Helin, Beijing, 100085 (CN)
(74) Representative: Gunzelmann, Rainer

(57) **Abstract**

The invention provides a cell, a battery assembly, and an electronic device. The cell comprises first electrode piece, second electrode piece, diaphragm, and fixing member which are sequentially laminated to one another and wound to form a bare cell body. The first electrode piece is located at outermost side of the bare cell body and comprises first end portion located on an outer surface of the bare cell body. The first electrode piece is provided with a first active layer extending to the first end portion. The first end portion is fixed to the outer surface of the bare cell body by the fixing member.

## Description

### BACKGROUND

The present application relates to the technical field of batteries, and particularly to a cell, a battery assembly and an electronic device.

With the development of electronic devices, batteries with large energy densities are popular. The energy density of the battery is associated with a material of the battery, a structure of the cell and a content of an active layer on the cell. For example, the cell comprises a first electrode piece, a separator and a second electrode piece sequentially laminated to one another. The first electrode piece, the separator and the second electrode piece are wound to form a bare cell body. The first electrode piece is located at an outermost side, and the energy density of the cell is affected by the content of the active layer on the first electrode piece and the second electrode piece. However, the first electrode piece requires a blank current collector to be reserved to meet an encapsulation requirement, which is detrimental to increasing the energy density of the cell.

### SUMMARY

The present application provides an improved cell, a battery assembly, and an electronic device.

According to an aspect of the present application provides a cell comprising a first electrode piece, a second electrode piece, a diaphragm, and a fixing member.

The first electrode piece, the diaphragm, and the second electrode piece are sequentially laminated to one another and wound to form a bare cell body. The first electrode piece is located at an outermost side of the bare cell body.

The first electrode piece comprises a first end portion located on an outer surface of the bare cell body, the first electrode piece is provided with a first active layer extending to the first end portion, the first end portion is fixed to the outer surface of the bare cell body by the fixing member.

In an embodiment, the first end portion is connected with one end of the fixing member, another end of the fixing member is wound and fixed onto the outer surface of the bare cell body in an extension direction of a winding trajectory of the first electrode piece.

In an embodiment, the bare cell body comprises a first flat surface, a second flat surface opposite to the first flat surface, and a first curved arc surface between the first flat surface and the second flat surface, the fixing member extends from the first flat surface to the second flat surface around the first curved arc surface.

In an embodiment, the fixing member comprises adhesive paper wrapped and bonded to the outer surface of the bare cell body.

In an embodiment, the cell may further comprise an insulating protective member, the second electrode piece comprises a third end portion located at the outermost side, the insulating protective member is arranged between, a joint of the first end portion and the fixing member, and the third end portion.

In an embodiment, the insulating protective member is bonded to the third end portion.

In an embodiment, the insulating protective member is arranged between the diaphragm and the third end portion.

In an embodiment, the third end portion is provided with a second active layer.

In an embodiment, a distal end of the diaphragm located at the outermost side extends beyond the third end portion in a direction toward the fixing member.

According to another aspect of the present application provides a battery assembly comprising the cell of any one of the above-mentioned.

According to yet another aspect of the present application provides an electronic device comprising the battery assembly of any one of the above-mentioned.

The technical solution of the present application has at least the following beneficial effects.

The cell provided by the embodiment of the present application is based on the first electrode piece, the diaphragm and the second electrode piece which are sequentially laminated to one another and wound to form the bare cell body. The first electrode piece is located on the outermost side of the bare electric cell body. The first electrode piece comprises the first end portion located on the outer surface of the bare cell body. Since the first active layer extends to the first end portion which is fixed to the outer surface of the bare cell body by the fixing member, there is no blank current collector existed on the first electrode piece located on the outermost side, thus the first electrode piece can store more electric energy. The first electrode piece makes full use of the space of the bare cell body to increase energy density of the cell.

### BRIEF DESCRIPTION OF THE DRAWINGS

FIG. 1 is a schematic view of a cell in the related art;
FIG. 2 is a schematic view of a cell according to an exemplary embodiment of the present application;
FIG. 3 is a partial schematic view of a first electrode piece according to an exemplary embodiment of the present application;
FIG. 4 is a partial schematic view of a second electrode piece according to an exemplary embodiment of the present application;
FIG. 5 is a partial schematic structural view of a cell according to an exemplary embodiment of the present application.

### DETAILED DESCRIPTION

The exemplary embodiments will be described in detail herein, examples of which are illustrated in the accompanying drawings. When the following description refers to the drawings, the same numbers in different drawings indicate the same or similar elements unless otherwise indicated. The embodiments described in the following exemplary embodiments do not represent all embodiments consistent with the present application. On the contrary, they are merely examples of devices and methods consistent with some aspects of the application as detailed in the appended claims.

Terms used in the present invention are only adopted for the purpose of describing specific embodiments and not intended to limit the present invention. Unless otherwise specified, the technical or scientific terms used in the present invention shall have the ordinary meanings understood by those of ordinary skill in the art to which the present invention belongs. "First", "second" and similar terms mentioned in the specification and the claims of the present invention are adopted not to represent any sequence, number or importance but only to distinguish different parts. Similarly, similar terms such as "one" or "a/an" also do not represent a number limit but only represent existence of at least one. Unless otherwise specified, "comprise" or "include" and similar terms mean that elements or articles appearing before the "comprise" or "include" encompass the elements or articles appearing after the "comprise" or "include" and their equivalents, and other components or objects are not excluded. Similar terms such as "connect" or "interconnect" are not limited to physical or mechanical connection but may include electrical connection, either direct or indirect.

"A/an", "said" and "the" in a singular form in the specification and the appended claims of the present invention are also intended to include a plural form, unless other meanings are clearly denoted in the context of the present invention. It is also to be understood that term "and/or" used in the present invention refers to and includes one or any or all possible combinations of multiple associated items that are listed.

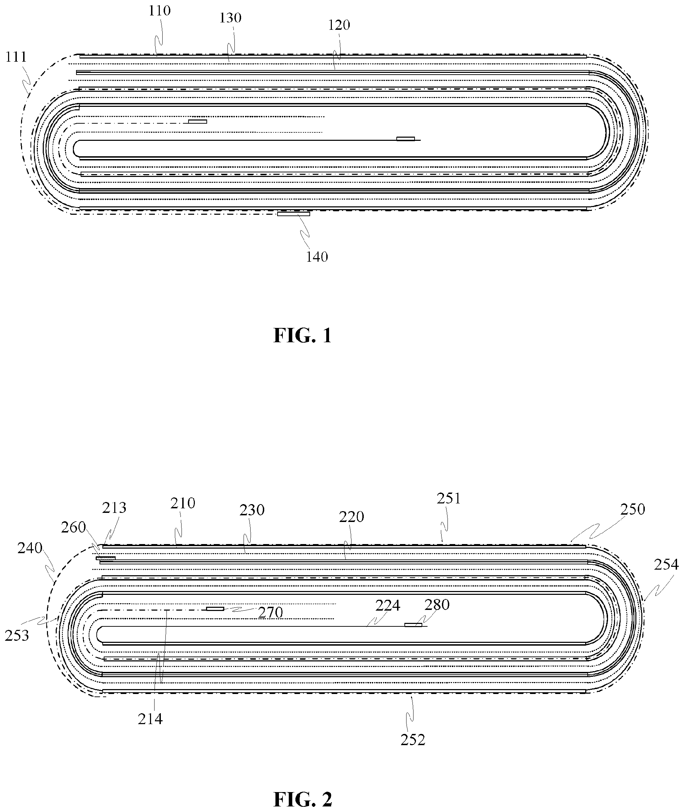

FIG. 1 is a schematic structural view of a cell in the related art. Referring to FIG. 1, a cell comprises a first electrode piece 110, a second electrode piece 120, a diaphragm 130 and a fixing member 140. The first electrode piece 110, the diaphragm 130 and the second electrode piece 120 are sequentially laminated to one another and wound to form a bare cell body, and the first electrode piece 110 is located at an outermost side. The first electrode piece 110 comprises a blank current collector 111 where an active layer is absent, the blank current collector 111 is wound and wrapped around an outer surface of the bare cell body, and then the blank current collector is fixed to the outer surface of the bare cell body by the fixing member 140. Since no active layer is provided on the blank current collector 111, the blank current collector cannot store electric energy for the cell. In addition, the blank current collector 111 occupies the space of the bare cell body, which is detrimental to increasing the energy density of the cell.

In order to solve the above problems, an embodiment of the present application provides a cell, a battery assembly and an electronic device, which are described in detail below in connection with the accompanying drawings:

Some embodiments of the present application provide an electronic device which comprises a battery assembly. The electronic device comprises, but is not limited to: a mobile phone, a tablet computer, an iPad, a digital broadcast terminal, an information transmitter-receiver, a game console, a medical device, an exercise device, a personal digital assistant, an intelligent wearable device, an intelligent television, a floor sweeping robot, an intelligent sound box, and the like.

The embodiment of the application provides a battery assembly for powering an electronic device. The battery assembly comprises a cell. The battery assembly may further comprise a battery protection plate. The cell is connected to the battery protection plate, the battery protection plate is connected to the mainboard of the electronic device, and the mainboard of the electronic device is connected to a charging interface. A charging current input to the cell and a supply current output by the cell are adjusted through the battery protection plate.

In an example, the battery assembly is a lithium ion battery assembly and the cell is a lithium ion cell.

FIG. 2 is a schematic view of a cell according to an exemplary embodiment of the present application. Referring to FIG. 2, the cell comprises a first electrode piece 210, a second electrode piece 220, a diaphragm 230 and a fixing member 240.

The first electrode piece 210, the diaphragm 230 and the second electrode piece 220 are sequentially laminated to one another and wound to form a bare cell body 250, and the first electrode piece 210 is located at an outermost side. It should be understood that the first electrode piece 210, the diaphragm 230 and the second electrode piece 220 sequentially laminated, are regarded as one layer. When they are wound, the first electrode piece 210 is always located at the outermost side, and the second electrode piece 220 is always located at an innermost side. In an example, one of the first electrode piece 210 and the second electrode piece 220 is a positive electrode piece and the other is a negative electrode piece. In an example, the first electrode piece 210 may be the positive electrode piece and the second electrode piece 220 may be the negative electrode piece.

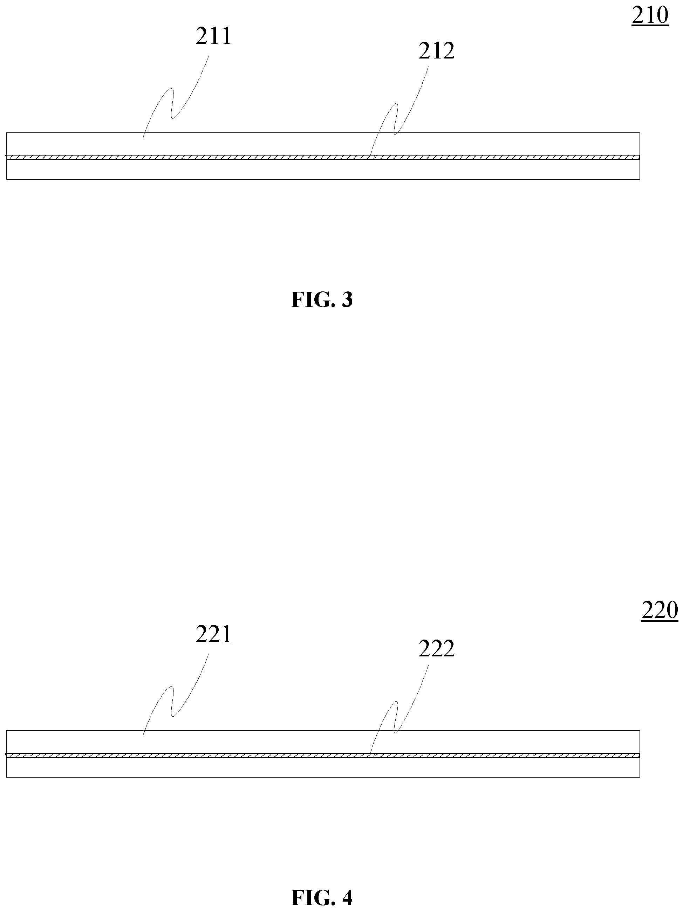

FIG. 3 is a partial schematic structural view of a first electrode piece according an exemplary embodiment of the present application, and FIG. 4 is a partial schematic structural view of a second electrode piece according to an exemplary embodiment of the present application. In an example, referring to FIG. 3, both surfaces of the first electrode piece 210 may be provided with a first active layer 211 which is facilitating to increasing the energy density of the cell. Referring to FIG. 4, both surfaces of the second electrode piece 220 may be provided with a second active layer 221, which is facilitating to increasing the energy density of the cell. When the first electrode piece 210 is the positive electrode piece, the first active layer 211 is a positive active layer; and when the second electrode piece 220 is the negative electrode piece, the second active layer 221 is a negative pole active layer.

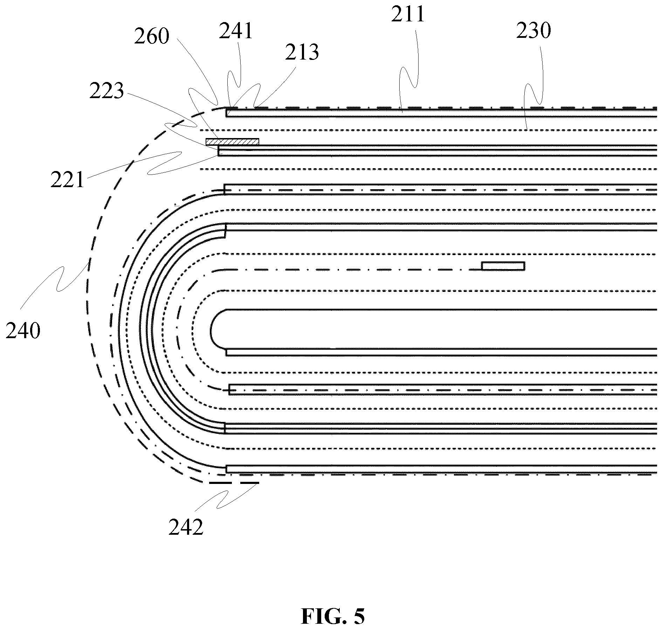

FIG. 5 is a partial schematic structural view of a cell according to an exemplary embodiment of the present application. Referring to FIG. 5, the first electrode piece 210 comprises a first end portion 213 located on an outer surface of the bare cell body 250. The first electrode piece 210 is provided with the first active layer 211 extending to the first end portion 213, and the first end portion 213 is fixed to the outer surface of the bare cell body 250 by a fixing member 240. It should be noted that the first electrode piece 210 comprises a first end portion 213, which is located on the outer surface of the bare cell body 250, and a second end portion opposite to the first end portion 213 which is wound within the bare cell body 250. In an example, with reference to FIG. 3, the first electrode piece 210 comprises a first current collector 212 and the first active layer 211 overlying the first current collector 212 With reference to FIG. 4, the second electrode piece 220 comprises a second current collector 222 and the second active layer 221 overlying the second current collector 222.

Based on the above, the cell provided by the embodiment of the present application is based on the first electrode piece 210, the diaphragm 230 and the second electrode piece 220 which are sequentially laminated to one another and wound to form the bare cell body 250. The first electrode piece 210 is located on the outermost side of the bare electric cell body 250. The first electrode piece 210 comprises the first end portion 213 located on the outer surface of the bare cell body 250. Since the first active layer 211 extends to the first end portion 213 which is fixed to the outer surface of the bare cell body 250 by the fixing member 240, there is no blank current collector existed on the first electrode piece 210 located on the outermost side, thus the first electrode piece 210 can store more electric energy. The first electrode piece 210 makes full use of the space of the bare cell body to increase energy density of the cell.

In some embodiments, with reference to FIG. 5, the first end portion 213 is connected with one end of the fixing member 240. Another end of the fixing member 240 is wound and fixed onto the outer surface of the bare cell body 250 in an extension direction of a winding trajectory of the first electrode piece 210. It should be understood that the extension direction of the winding trajectory of the first electrode piece 210 is the winding direction. The fixing member 240 is wound on the outer surface of the bare cell body 250, that is, the fixing member 240 is wound on the outer surface of the first electrode piece 210. In this way, it is beneficial to the firm fixing of the first electrode piece 210 by the fixing member 240, thereby stabilizing the structure of the entire bare cell body 250.

In the embodiment of the present application, the bare cell body 250 may be of a variety of structures, such as cylindrical structure, square structure, or other regular or irregular structure. In some embodiments, with reference to FIG. 2, the bare cell body 250 comprises a first flat surface 251, a second flat surface 252 opposite to the first flat surface 251, and a first curved arc surface 253 between the first flat surface 251 and the second flat surface 252. The fixing member 240 extending from the first flat surface 251 to the second flat surface 252 around the first curved arc surface 253. In other words, the bare cell body 250 has a structure similar to square, and the fixing member 240 is wrapped around the first curved arc surface 253. It should be understood that the first curved arc surface 253 protrudes outward from an inside of the bare cell body 250. The first curved arc surface 253 is the outermost arc surface between the first flat surface 251 and the second flat surface 252. The first curved arc surface 253 is an arc surface formed by bending the first electrode piece 210. In this way, it is beneficial to the firm fixing of the first electrode piece 210 to the outer surface of the bare cell body 250 by the fixing member 240. In an example, a size of the first flat surface 251 and a size of the second flat surface 252 are both larger than a size of the first curved arc surface 253 in the extension direction of the winding trajectory. In this way, a shorter length of the fixing member 240 can be used for wrapping, thereby preventing the fixing member 240 from occupying a larger space and affecting the energy density of the cell.

Further, in some embodiments, with reference to FIGS. 2 and 5, the cell body further comprises a second curved arc surface 254 opposite to the first curved arc surface 253. The second curved arc surface 254 is located between the first flat surface 251 and the second flat surface 252. The fixing member 240 comprises a first fixing end portion 241 fixed to the first plane surface 251 and a second fixing end portion 242 fixed to the second plane surface 252. The first fixing end portion 241 and the second fixing end portion 242 are both close to the first curved arc surface 253 between the first curved arc surface 253 and the second curved arc surface 254. It should be understood that the fixing member 240 between the first fixing end portion 241 and the second fixing end portion 242 is wrapped around the first curved arc surface 253. In this way, on the premise that the fixing member 240 can firmly fix the bare cell body 250 stably, a shorter fixing member 240 can be used to reduce the space occupied by the fixing member 240, thereby improving the energy density of the cell.

In some embodiments, the fixing member 240 comprises adhesive paper wrapped and bonded to the outer surface of the bare cell body 250. The adhesive paper is thin and occupies less space, so that it is conducive to increase the energy density of the cell. In addition, the method of bonding by the adhesive paper is simple, thereby facilitating the fixing of the bare cell body 250.

In some embodiments, with reference to FIG. 5, the second electrode piece 220 comprises a third end portion 223 located at the outermost side and a fourth end portion located inside of the bare cell body 250. The third end portion 223 is provided with a second active layer 221. The third end portion 223 of the second electrode piece 220 extends beyond the first end portion 213 of the first electrode piece 210 toward the fixing member 240. In this way, the third end portion 223 of the second electrode piece 220 inevitably has a burr, which is possible to easily pierce the diaphragm 230 and the fixing member 240, and thus the electrical conduction may be occurred between the third end portion 223 of the second electrode piece 220 and a encapsulating case such as an aluminum-plastic film of the bare cell body 250. When the first electrode piece 210 is the positive electrode piece and the second electrode piece 220 is the negative electrode piece, a short circuit or a electrochemical corrosion is easily formed between the second electrode piece 220 and the encapsulating case such as the aluminum-plastic film, so that safety problems such as the short circuit and the corrosion of the encapsulating case such as the aluminum-plastic film are easily caused. To solve this problem, in some embodiments with reference to FIGS. 2 or 5, the second electrode piece 220 comprises the third end portion 223 located at the outermost side, the cell further comprises an insulating protective member 260. The insulating protective member is arranged between, a joint of the first end portion 213 and the fixing member 240, and the third end portion 223 of the second electrode piece 220. By the insulating protective member 260, it is possible to prevent the third end portion 223 of the second electrode piece 220 from puncturing the fixing member 240, thereby avoiding the problems such as the short circuit and the corrosion of the encapsulating case such as the aluminum-plastic film of the bare cell body 250.

In some embodiments, with reference to FIG. 2, the insulating protective member 260 is arranged between the diaphragm 230 and the third end portion 223. In an example, the insulating protective member 260 is arranged on the diaphragm 230 to prevent the third end portion 223 of the second electrode piece 220 from piercing the diaphragm 230. In an example, the insulating protective member 260 is provided at the third end 223 to prevent the third end 223 of the second electrode piece 220 from piercing the diaphragm 230. Further, the insulating protective member 260 is bonded to the third end portion 223 for example. The bonding method is simple and easy to operate. In an example, the insulating protective member 260 may be an insulating adhesive layer.

In some embodiments, a distal end of the diaphragm 230 located at the outermost side extends beyond the third end portion 223 in a direction toward the fixing member 240. In an example, the distal end 230 the diaphragm 230 located at the outermost side extends beyond the third end portion 223 in a direction toward the fixing member 240 by 2 mm to 10 mm, such as 2 mm, 3 mm, 4 mm, 5 mm, 6 mm, 7 mm, 8 mm, 9 mm, 10 mm, etc. Thus, the diaphragm 230 and the insulating protective member 260 are cooperated with one another to effectively prevent the third end portion 223 of the second electrode piece 220 from piercing the fixing member 240.

In some embodiments, with reference to FIG. 2, the first electrode piece 210 comprises a first blank current collector 214 wrapped within the bare cell body 250. The second electrode piece 220 comprises a second blank current collector 224 wrapped within the bare cell body 250. The cell further comprises a first pole lug 270 electrically connected to the first blank current collector 214 and a second pole lug 280 electrically connected to the second blank current collector 224.

In some embodiments, with reference to FIG. 5, an inner surface of the first electrode piece 210 located at the outermost side of the bare cell body 250 is provided with the first active layer 211, and an outer surface of the first electrode piece 210 located at the outermost side of the bare cell body 250 is not provided with the first active layer 211. In this way, the space of the bare cell body 250 is fully utilized, and a waste of the first active layer 211 is avoided.

In summary, the cell, the battery assembly, and the electronic device provided in this embodiment of the present application are based on the first electrode piece 210, the separator 230, and the second electrode piece 220 which are sequentially laminated to one another and wound to form the bare cell body 250. The first electrode piece 210 is located on the outermost side of the bare electric cell body 250. The first electrode piece 210 comprises the first end portion 213 located on the outer surface of the bare cell body 250. Since the first active layer 211 extends to the first end portion 213 which is fixed to the outer surface of the bare cell body 250 by the fixing member 240, there is no blank current collector existed on the first electrode piece 210 located on the outermost side, thus the first electrode piece 210 can store more electric energy. The first electrode piece 210 makes full use of the space of the bare cell body to increase energy density of the cell. By arranging the insulating protective member 260 between, a joint of the first end portion 213 of the first electrode piece 210 and the fixing member 240, and the third end portion 223, the burr of the third end portion 223 of the second electrode piece 220 can be prevented from puncturing the diaphragm 230 and the fixing member 240, thereby avoiding the problem of the short circuit or the corrosion of the encapsulating case such as the aluminum-plastic film of the bare cell body 250.

The above-described embodiments of the present application may be complementary to each other without conflict.

The above are only the preferred embodiments of the present application and are not intended to limit the present application. Any modifications, equivalents, improvements, etc. which fall within the spirit and principles of the present application are intended to be comprised within the scope of protection of the present application.

## Claims

1. A cell, **characterized in that** the cell comprises a first electrode piece (210), a second electrode piece (220), a diaphragm (230) and a fixing member (240);
the first electrode piece (210), the diaphragm (230) and the second electrode piece (220) are sequentially laminated to one another and wound to form a bare cell body (250), the first electrode piece (210) being located at an outermost side of the bare cell body (250);
the first electrode piece (210) comprises a first end portion (213) located on an outer surface of the bare cell body (250), the first electrode piece (210) being provided with a first active layer (211) extending to the first end portion (213), the first end portion (213) being fixed to the outer surface of the bare cell body (250) by the fixing member (240).

2. The cell according to claim 1, wherein the first end portion (213) is connected with one end of the fixing member (240), another end of the fixing member (240) being wound and fixed onto the outer surface of the bare cell body (250) in an extension direction of a winding trajectory of the first electrode piece (210).

3. The cell according to claim 2, wherein the bare cell body (250) comprises a first flat surface (251), a second flat surface (252) opposite to the first flat surface (251), and a first curved arc surface (253) between the first flat surface (251) and the second flat surface (252), the fixing member (240) extending from the first flat surface (251) to the second flat surface (252) around the first curved arc surface (253).

4. The cell according to claim 1, wherein the fixing member (240) comprises adhesive paper wrapped and bonded to the outer surface of the bare cell body (250).

5. The cell according to claim 1, wherein the second electrode piece (220) comprises a third end portion (223) located at the outermost side, the cell further comprising an insulating protective member (260) arranged between, a joint of the first end portion (213) and the fixing member (240), and the third end portion (223).

6. The cell according to claim 5, wherein the insulating protective member (260) is arranged between the diaphragm (230) and the third end portion (223).

7. The cell according to claim 6, wherein the insulating protective member (260) is bonded to the third end portion (223).

8. The cell according to any one of claims 5 to 7, wherein a distal end of the diaphragm (230) located at the outermost side extends beyond the third end portion (223) in a direction toward the fixing member (240).

9. A battery assembly, comprising the cell of any one of claims 1 to 8.

10. An electronic device, comprising the battery assembly of claim 9.
